# FASCICULE DE BREVET EUROPEEN

(11) **EP 0 379 257 B1**
(45) Date de publication et mention de la délivrance du brevet: **18.05.1994**
(21) Numéro de dépôt: 90200106.4
(22) Date de dépôt: 16.01.1990
(51) Int. Cl.: B65G 47/91, B66C 1/02, B25B 11/00

(54) **Dispositif de saisie par dépression**
Unterdruck-Aufnahmevorrichtung
Vacuum gripping device

(30) Priorité: 20.01.1989 FR 8900669
(43) Date de publication de la demande: 25.07.1990
(73) Titulaire: PHILIPS CIRCUITS IMPRIMES, 27016 Evreux (FR); Philips Electronics N.V., 5621 BA Eindhoven (NL)
(72) Inventeur: Sorel, Alain, F-75007 Paris (FR)
(74) Mandataire: Caron, Jean

(56) Documents cités:
- US-A- 3 033 604
- US-A- 3 174 789
- US-A- 4 674 785

## Description

La présente invention concerne un dispositif de manutention pour saisir des pièces par dépression, muni d'une pluralité de modules munis chacun d'un élément de contact qui possède un orifice relié à un conduit dans lequel peut être établie une dépression, avec en série dans le conduit de dépression un clapet sollicité en fermeture par le courant d'air éventuellement aspiré dans le conduit, et muni d'un réservoir servant de réserve de vide, placé à proximité immédiate de l'élément de contact et du clapet.

Un tel dispositif est utilisé par exemple pour la manutention de pièces planes, et ledit élément de contact peut alors être une ventouse en caoutchouc qui comporte, généralement en son centre, un orifice d'aspiration, et qui est tournée vers le bas. Le dispositif pourrait être utilisé aussi comme support, par exemple dans une machine outil, auquel cas ledit élément de contact serait une plaque plane avec un orifice tourné vers le haut.

En général, le dispositif est équipé d'une pluralité d'orifices qui sont tous reliés au même circuit de dépression. Or les pièces à travailler n'ont pas toutes la même dimension, et il est souhaité que les orifices situés hors du gabarit de la pièce à travailler, et par conséquent non bouchés par elle, ne soient pas mis en dépression afin d'éviter une "fuite de vide" : ce problème est résolu par le clapet qui est sollicité en fermeture par un courant d'air éventuellement aspiré dans le conduit.

Ceci est connu du document US-P-4,674,785 (Riesenberg) qui décrit un dispositif fait d'un plateau muni d'une pluralité d'orifices, sous lequel se trouvent des modules isolés les uns des autres par des cloisons, chaque module correspondant à un des orifices et étant muni d'un clapet sollicité en fermeture par un courant d'air, le dispositif étant muni en outre d'un réservoir servant de réserve de vide, placé à proximité immédiate des modules et des clapets.

Le dispositif selon l'invention est utilisé pour la manutention de circuits imprimés dans l'industrie électronique : les circuits imprimés sont, au moins à partir d'un certain stade de leur fabrication, munis de trous de dimensions variées répartis plus ou moins régulièrement. On désire que des plaques de circuit imprimé puissent être saisies de façon fiable même lorsqu'il y a des trous, ou au moins lorsqu'il y a des trous de petite taille. En d'autres termes, on désire que la fuite d'air occasionnée par la présence de petits trous dans la pièce n'entraîne pas la fermeture du clapet, alors que la présence de plus grands trous entraîne cette fermeture. Le réglage de la dépression est un des paramètres qui déterminent pour quelle dimension du trou la fermeture a lieu, mais l'établissement de la dépression n'est pas instantané et l'actionnement des clapets dépend aussi de la vitesse avec laquelle la dépression s'établit. Les dispositifs de l'art antérieur ne sont pas très satisfaisants à ce point de vue parceque le contrôle de l'établissement du vide qui provoque l'actionnement du clapet est imprécis.

L'invention se propose de résoudre ce problème.

Cela est obtenu parce qu'une vanne est insérée entre le réservoir et le conduit de dépression, pour commander l'établissement de la dépression.

Ceci permet en outre d'utiliser une pompe à vide très petite puisque, le débit moyen étant faible du fait que les orifices sont à peu près toujours fermés soit du fait de la présente d'une pièce soit par le clapet, la réserve de vide suffit pour assurer les débits transitoires. La vanne sert à couper la dépression au moment où l'on applique la pièce sur l'orifice, et à la rétablir ensuite.

Le document US-P-3 307 817 (figure 1) décrit un sommier muni d'une cloison en spirale qui constitue un conduit de répartition menant l'air depuis les orifices du plateau vers une pompe. On pourrait imaginer d'alimenter le conduit de répartition de l'art antérieur au moyen d'une réserve de vide et d'une vanne selon l'invention. Il est cependant encore plus avantageux, pour obtenir le meilleur contrôle possible de l'établissement de la dépression, que chaque module comporte sa propre vanne.

Chaque vanne possède avantageusement un volet de fermeture muni de moyens pour le commander à volonté. Par exemple chaque volet de fermeture est avantageusement muni d'un organe faisant saillie à l'extérieur du module, disposé de façon à ce qu'un appui sur ledit organe ouvre la vanne.

En outre la commande est particulièrement simplifiée quand les modules sont disposés en une seule ligne, le dispositif étant alors équipé d'un arbre à cames muni d'une pluralité de cames dont chacune peut appuyer sur un desdits organes.

Chaque module comporte avantageusement un corps à l'intérieur duquel sont situés le clapet et la vanne, de façon à constituer une entité indépendante.

Ainsi la réalisation d'une ligne ou d'un réseau de ventouses à clapets automatiques performants est rendue particulièrement aisée : les modules indépendants selon l'invention peuvent être bon marché grâce à une fabrication en grandes quantités, et il suffit d'en assembler une certaine quantité pour constituer une ligne ou un réseau particulier.

Un premier mode de réalisation de l'invention non représenté consiste à ajouter aux dispositifs de l'art antérieur un caisson servant de réserve de vide, placé à proximité immédiate des points d'aspiration, et une vanne disposée entre cette réserve de vide et le réseau de distribution vers les points d'aspiration, ce réseau étant le plus court possible. Ceci améliore déja notablement la précision du déclenchement des clapets. Néanmoins, le mode de réalisation préféré de l'invention est celui dans lequel on emploie une vanne par point d'aspiration : un tel mode de réalisation va être décrit maintenant, en regard des dessins annexés décrivant un exemple non limitatif.

La figure 1 est une vue en coupe d'un module selon l'invention.

La figure 2 illustre le fonctionnement du clapet et de la vanne.

La figure 3 est une vue en coupe dans une ligne de modules commandés par un arbre à cames.

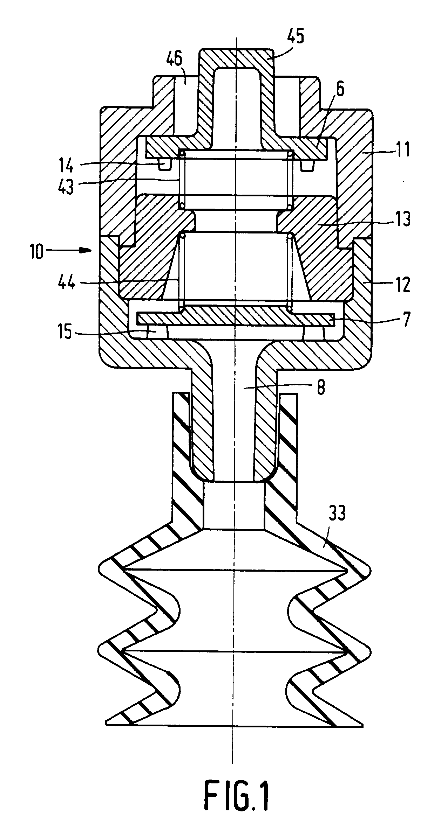

Un dispositif de manutention pour saisir par dépression des plaques de circuits imprimés, muni d'une pluralité de modules sera décrit plus loin en détail à propos de la figure 3. La figure 1 sera décrite d'abord : elle représente un module qui est une entité indépendante.

La section horizontale de ce module qui n'est pas visible sur la figure peut être quelconque, mais il est bien évident qu'une pièce cylindrique est plus facile à fabriquer. Ce module comporte un corps 10 auquel est fixé un élément de contact qui est ici une ventouse 33 en matériau souple, par exemple du caoutchouc, et qui possède (en bas sur la figure) un orifice contre lequel peut être appliquée une plaque que l'on désire saisir lors d'une opération de manutention. Le fond (le haut) de la ventouse 33 est raccordé à un conduit d'air 8.

Le corps est fait de trois parties 11, 12, 13, par exemple en matière plastique, assemblés entre elles par collage.

La partie ou coquille inférieure 12 comporte un embout dans lequel passe le conduit 8 et auquel est fixée par un moyen quelconque, par exemple par collage, la ventouse 33. Cette partie est munie d'un clapet 7, dont le fonctionnement sera expliqué plus loin.

La partie ou coquille supérieure 11 est munie, en haut, d'une ouverture 46. Les deux coquilles sont fixées l'une à l'autre et l'ensemble constitue un boitier muni d'ouvertures en haut et en bas. La partie 13 est une pièce interne qui est enfermée entre les deux coquilles 11 et 12 et est maintenue en position en bas par un ressaut dans la paroi de la coquille 12, et en haut par l'extrémité inférieure de la coquille 11. Bien entendu, cette pièce est ajourée de façon à laisser passer l'air dans la direction verticale.

Le clapet 7 est poussé vers le bas par un ressort 44 qui s'appuie sur une nervure de la pièce 13 et il est soutenu par des plots 15 pour permettre à l'air de passer entre le clapet et le corps. Ainsi, lorsqu'on applique le vide et que rien ne bouche l'orifice de la ventouse, le courant d'air aspiré soulève le clapet 7 et l'applique contre le bas de la pièce 13, qui sert ainsi de siège au clapet, ce qui obture le conduit et assure qu'on ne consomme pas plus longtemps de l'air inutilement.

Le module de la figure 1 est aussi pourvu d'une vanne possédant un volet de fermeture 6, poussé vers le haut contre la paroi de la coquille 11 par un ressort 43 qui s'appuie sur la même nervure de la pièce 13 que le ressort 44, mais de l'autre côté de cette nervure. Des plots 14 sont prévus sous le volet 6 pour empêcher que ce volet soit poussé trop loin vers le bas ce qui fermerait le conduit. Ce volet est muni d'un ergot 45 qui dépasse à l'extérieur du module par l'ouverture 46. Lorsqu'on appuie sur ce dernier, cela fait descendre le volet 6 et ouvre le passage par l'ouverture supérieure 46.

Ainsi donc, en l'absence d'action de commande ou d'effet dû au passage d'air, le clapet 7 est ouvert et le volet 6 est fermé.

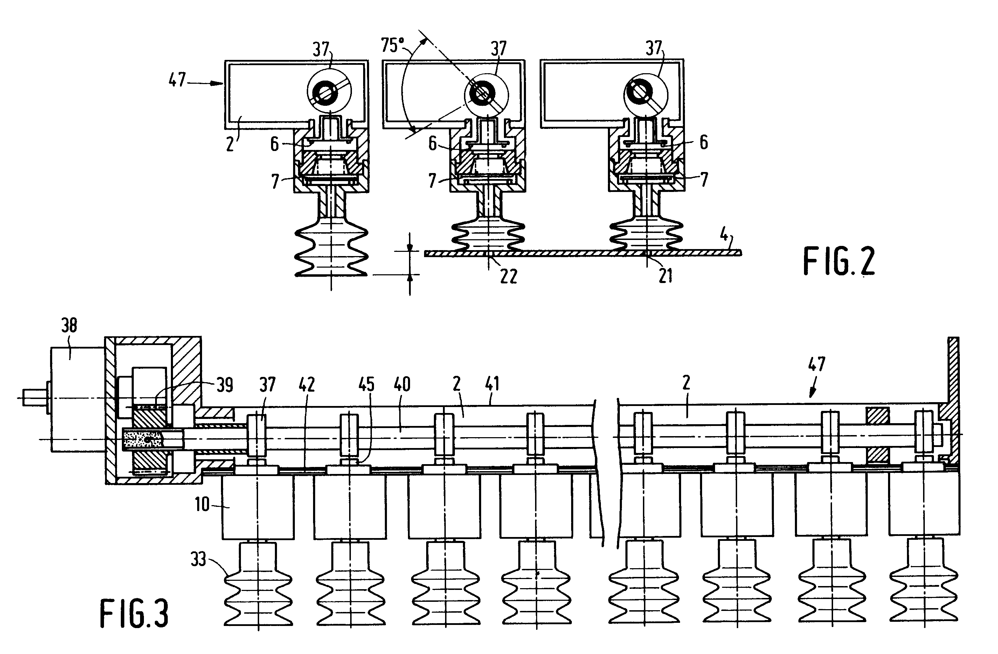

La figure 2 représente trois fois le même dispositif vu en coupe dans trois phases de fonctionnement.

On y retrouve le même module que celui de la figure 1, muni du clapet 7 et de la vanne 6. Ce module est fixé à un carter qui délimite un volume 2 et est relié à une pompe à vide non représentée. Ce volume 2 constitue une réserve de vide et peut communiquer avec l'intérieur du corps du module par l'ouverture supérieure de ce dernier, lorsque la vanne 6 est ouverte.

Le dessin à gauche correspond à l'absence d'action de commande ou d'effet dû au passage d'air, le clapet 7 est ouvert et le volet 6 est fermé.

Dans le volume 2 est installée une came 37 dont la disposition et la commande seront expliqués plus loin. Dans une position particulière de cette came, elle pousse sur l'ergot 45 dont est muni le volet 6, et ouvre ce volet.

Le cycle opératoire à observer pour réaliser une manutention avec un un tel dispositif est le suivant :
- amener en contact un circuit imprimé avec les orifices inférieurs des ventouses, ou au moins de certaines d'entre elles,
- ouvrir le volet 6,
- déplacer l'ensemble,
- fermer le volet 6 pour lâcher la pièce.

Sur le dessin du centre et sur celui de droite, la came appuie sur l'ergot du volet 6, et un circuit imprimé 4 est tenu sous le dispositif. Sur le dessin du centre, le circuit 4 est percé d'un trou 22, par lequel peut passer un flux d'air important qui soulève le clapet 7 et obture le conduit de vide. Comme plusieurs dispositifs semblables agissent ensemble pour saisir le circuit 4, celui-ci est néanmoins tenu, mais pas par le module en question.

Sur le dessin de droite, le circuit 4 est percé d'un trou 21 plus petit, par lequel le flux d'air qui peut passer n'est pas assez important pour soulever le clapet 7 et obturer le conduit de vide : malgré la fuite d'air par le trou, le circuit 4 est tenu par le module en question. Le niveau de fuite pour lequel le circuit 4 est encore tenu par le module peut être réglé par différents moyens, dont bien entendu le tarage du ressort 44, qui doit donc être précis, alors que celui du ressort 43 qui est comprimé par la came n'est pas critique. Ce réglage est également dépendant de la dépression appliquée au système, qui peut être ajusté par exemple au moyen d'un servo-déclenchement de la pompe à vide, ou par insertion d'un détendeur réglable, ces moyens que l'homme du métier sait réaliser n'étant pas représentés. Une dépression de l'ordre de 300 hectopascals dans la réserve de vide 2 est susceptible de donner de bons résultats.

Dans un mode de réalisation qui donne satisfaction le clapet a un diamètre l'ordre de 10 à 15 mm, et il faut un ou quelques dixièmes de newton pour pousser le ressort 44 et fermer le clapet.

Un module tel que celui de la figure 1 comporte ainsi un clapet automatique et une vanne intégrés, grâce auquel des dispositifs complets comprenant un réseau de tels modules peuvent être constitués très facilement.

La figure 3 peut être considérée comme une vue latérale correspondant à la vue en bout de la figure 2. Elle montre en coupe le carter servant de réserve de vide 2. Les modules 10, 33 ne sont pas représentés en coupe, puisqu'ils ont déja été décrits.

Ce dispositif comporte une pluralité de modules : pour simplifier le dessin, quand une référence numérique concerne une pluralité d'éléments, elle n'est indiquée qu'une seule fois : par exemple, un seul module porte les références 10, 33. Chaque module comporte sa propre vanne, dont la figure montre la partie d'ergot 45 dépassant à l'extérieur du module.

Les modules sont disposés en une seule ligne sur un support commun, qui est ici constitué par le carter de réserve de vide lui même. Celui-ci a la forme d'une poutre ou d'une barre de section rectangulaire (on peut voir cette section sur la figure 2) dont la figure 3 montre les deux parois supérieure 41 et inférieure 42.

Le dispositif est équipé d'un arbre à cames 40, qui est situé dans la réserve de vide et est muni d'une pluralité de cames 37 dont chacune peut appuyer sur un des ergots 45. Un moteur 38 entraîne l'arbre 40 par l'intermédiaire d'un train d'engrenages 39. Celui-ci est situé ici dans le carter, c'est-à-dire sous vide, et un joint peut être prévu à l'entrée de l'axe du moteur dans le carter. Bien entendu d'autres variantes sont possibles du point de vue mécanique pour l'entraînement de l'arbre.

Au cas ou une ligne de points d'aspiration ne serait pas suffisante, on pourrait placer côte à côte plusieurs barres de ce type et constituer ainsi des réseaux ou matrices de points d'aspiration.

Ainsi que cela a déja été mentionné, on pourrait aussi utiliser l'invention avec un réseau de points d'aspiration plan du genre de ceux décrits dans les documents d'art antérieur cités, soit en les munissant d'un sommier commun à tous les points d'aspiration, sommier communiquant avec une réserve de vide par une vanne unique, soit avec une vanne par point d'aspiration, communiquant directement avec un réservoir de vide. Dans ce dernier cas, une série d'arbres à cames tels que celui décrit plus haut peut être utilisée. On peut aussi imaginer d'autres solutions que l'emploi d'un arbre à cames, comme l'emploi de poussoirs hydrauliques ou à actionnement électromagnétique, sans sortir du cadre général de l'invention.

## Revendications

1. Dispositif de manutention pour saisir des pièces par dépression, muni d'une pluralité de modules munis chacun d'un élément de contact (33) qui possède un orifice relié à un conduit (8) dans lequel peut être établie une dépression, avec en série dans le conduit de dépression un clapet (7) sollicité en fermeture par le courant d'air éventuellement aspiré dans le conduit, et muni d'un réservoir (2) servant de réserve de vide, placé à proximité immédiate de l'élément de contact et du clapet, caractérisé en ce qu'une vanne (6) est insérée entre le réservoir et le conduit de dépression, pour commander l'établissement de la dépression.

2. Dispositif selon la revendication 1, caractérisé en ce que chaque module comporte sa propre vanne (6).

3. Dispositif selon l'une des revendications 1 ou 2, caractérisé en ce que chaque vanne possède un volet de fermeture (6) muni de moyens pour le commander à volonté.

4. Dispositif selon l'une quelconque des revendications précédentes, caractérisé en ce que les modules sont disposés en ligne sur un support commun.

5. Dispositif selon la revendication 4, caractérisé en ce que les modules sont disposés en une seule ligne et le support commun (47) est en forme de barre.

6. Dispositif selon la revendications 3, caractérisé en ce que chaque volet de fermeture est muni d'un organe faisant saillie à l'extérieur du module et disposé de façon qu'un appui sur cet organe ouvre la vanne, les modules sont disposés en une seule ligne et le dispositif est équipé d'un arbre à cames (40) muni d'une pluralité de cames (37) dont chacune peut appuyer sur un desdits organes (45).

7. Dispositif selon l'une quelconque des revendications précédentes, caractérisé en ce que chaque module comporte un corps (10) à l'intérieur duquel sont situés le clapet (7) et la vanne (6), de façon à constituer une entité indépendante.

8. Module destiné à faire partie d'un dispositif selon la revendication 7.

## Claims

1. A handling device for gripping workpieces by vacuum, provided with a plurality of modules each provided with a contact element (33) which has a opening connected to a conduit (8) in which a vacuum can be established, with a valve (7) included in series in the vacuum conduit so as to be closed by a air current which may possibly be drawn into the conduit, and provided with a reservoir (2) serving as a vacuum buffer placed in the immediate vicinity of the contact element and the valve, characterized in that a shutter (6) is inserted between the reservoir and the vacuum conduit for controlling the establishment of the vacuum.

2. A device as claimed in Claim 1, characterized in that each module comprises its own shutter (6).

3. A device as claimed in one of the Claims 1 and 2, characterized in that each shutter comprises a closing member (6) provided with means for controlling it at will.

4. A device as claimed in any one of the preceding Claims, characterized in that the modules are arranged in line on a common support.

5. A device as claimed in Claim 4, characterized in that the modules are arranged in one line and the common support (47) has the shape of a beam.

6. A device as claimed in Claim 3, characterized in that each closing member is provided with a element projecting to the exterior of the module, arranged such that a pressure on this element opens the shutter, the modules are arranged in one line, and the device is equipped with a camshaft (40) provided with a plurality of cams (37), each of which can press on one of said elements (45).

7. A device as claimed in any one of the preceding Claims, characterized in that each module comprises a body (10) within which are situated the valve (7) and the shutter (6) so as to form an independent unit.

8. A module constructed so as to form part of a device as claimed in Claim 7.

## Patentansprüche

1. Transportvorrichtung zum Aufnehmen von Bauelementen durch Unterdruck, mit einer Anzahl von Modulen mit je einem Kontaktelement (33), das eine Öffnung in Verbindung mit einer Rohrleitung (8) enthält, in der ein Unterdruck aufgebaut werden kann, mit einem in der Unterdruckrohrleitung reihengeschalteten Ventil (7), das durch den möglicherweise in der Rohrleitung angesaugten Luftstrom zum Schließen gebracht wird, und mit einem Behälter (2) als Leerraum in unmittelbarer Nähe des Kontaktelements und des Ventils angeordnet ist, dadurch gekennzeichnet, daß der Schieber (6) zwischen dem Behälter und der Unterdruckrohrleitung zum Steuern der Erzeugung des Unterdrucks angeordnet ist.

2. Vorrichtung nach Anspruch 1, dadurch gekennzeichnet, daß jedes Modul den eigenen Schieber (6) aufweist.

3. Vorrichtung nach einem der Ansprüche 1 oder 2, dadurch gekennzeichnet, daß jeder Schieber eine Ab-schließklappe (6) mit Mitteln zum beliebigen Steuern enthält.

4. Vorrichtung nach einem oder mehereren der vorangehenden Ansprüche, dadurch gekennzeichnet, daß die Module auf einem gemeinsamen Träger in einer Linie liegen.

5. Vorrichtung nach Anspruch 4, dadurch gekennzeichnet, daß die Module auf einer einzigen Linie liegen und der gemeinsame Träger (47) eine Balkenform hat.

6. Vorrichtung nach Anspruch 3, dadurch gekennzeichnet, daß jede Abschließklappe mit einem aus dem Modul herausragenden Organ versehen und derart angeordnet ist, daß die Betätigung dieses Organs die Klappe öffnet, daß die Module auf eine Linie positioniert und die Vorrichtung mit einer Nockenwelle (40) mit mehreren Nocken versehen ist, von denen jeder eines der Organe (45) betätigen kann.

7. Vorrichtung nach einem oder mehreren der vorangehenden Ansprüche, dadurch gekennzeichnet, daß jedes Modul einen Körper (10) enthält, in dessen Inneren sich das Ventil (7) und die Klappe (6) derart befinden, daß sie eine unabhängige Entität bilden.

8. Modul als Teil einer Vorrichtung nach Anspruch 7.
